# EUROPEAN PATENT SPECIFICATION

(11) **EP 0 635 382 B1**
(45) Date of publication and mention of the grant of the patent: **08.01.1997**
(21) Application number: 94305378.5
(22) Date of filing: 21.07.1994
(51) Int. Cl.: B60C 11/04, B60C 11/11

(54) **Pneumatic tyre**
Luftreifen
Bandage pneumatique

(30) Priority: 23.07.1993 JP 202021/93; 04.07.1994 JP 173126/94
(43) Date of publication of application: 25.01.1995
(73) Proprietor: Sumitomo Rubber Industries Ltd., Kobe-shi, Hyogo-ken (JP)
(72) Inventor: Wada, Mitsuhiro, Myohoji, Suma-ku, Kobe-shi, Hyogo (JP)
(74) Representative: Stewart, Charles Geoffrey

(56) References cited:
- EP-A- 0 371 788
- EP-A- 0 477 542
- EP-A- 0 547 040
- DE-A- 4 019 631
- US-A- 5 109 903

## Description

The present invention relates to a pneumatic tyre in which the effect of residual cornering force due to the tread pattern is sufficiently suppressed to provide improved maneuverability.

To assure effective water drainage, the surfaces of ordinary roads have cants or are inclined in such a way that they are highest in the central area while decreasing in height towards either shoulder of the road. Hence, a vehicle running straight on a straight road is subjected to a force exerted by the road to have the vehicle go down the cant, whereby it has a tendency to swerve in that direction.

As a matter of fact, depending on various tyre factors such as construction and shape, the tyre itself can be an effective source of lateral force, which is commonly referred to as "residual cornering force". If the residual cornering force balances with the lateral force developed by the cant, the vehicle will not swerve.

The residual cornering force is generally held to be highly susceptible to the direction of the belt placed under the tread, particularly to the direction of the belt cords that lie radially outwards of the tyre. Accordingly, the direction in which the belt cords are attached is in turn determined by the cant of the road.

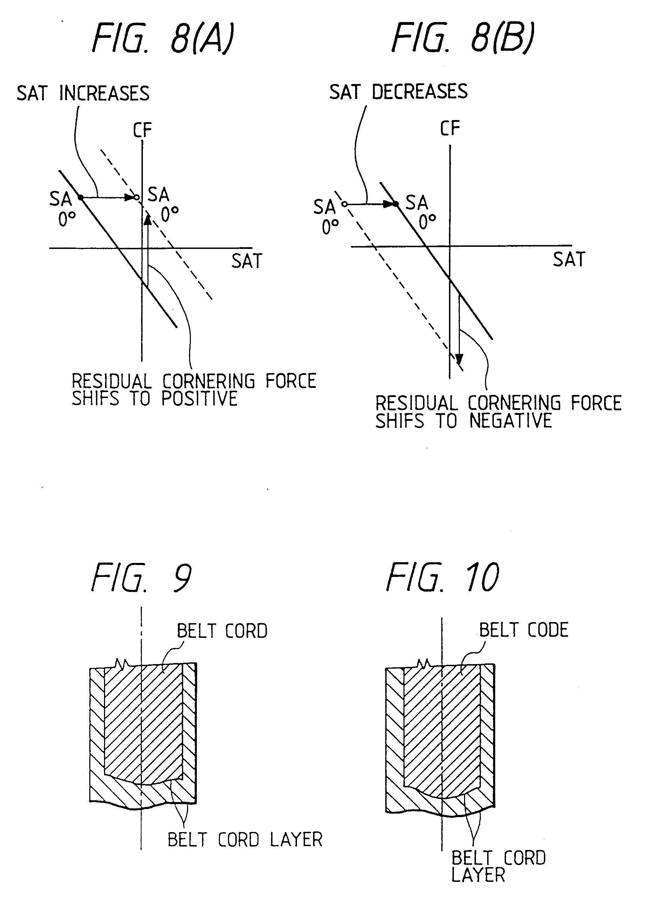

Consider, for example, the case where vehicles are required to run on the left side of the road; since the road surface on the left side is provided with a cant sloping downward to the left, some swerving of vehicles can be prevented if the cord in the outermost layer of the belt is attached in a direction sloping upward to the right as seen from the outside of the tyre (see Fig. 9). In the other case where vehicles are required to run on the right side of the road, the road surface on the right side is provided with a cant sloping downward to the right; therefore, some swerving of vehicles can be prevented if the cord in the outermost layer of the belt is attached in a direction sloping upward to the left as seen from the outside of the tyre (see Fig. 10).

In fact, however, the residual cornering force is occasionally developed by the tread pattern and it has been difficult to develop an appropriate amount of residual cornering force by simply adjusting the direction of the belt cords.

A brief description of the developing mechanism of the residual cornering force is given here. Since the crown portion of the tyre tread has a greater radius of rotation than the shoulder portion, a tractive force works on the blocks provided in the crown portion and a braking force on the blocks in the shoulder portion. Here, the blocks are twisted in the flow direction of the tread pattern, namely, in the direction determined by the inclination of the block sides relative to the direction of the tread's width and the resulting torque develops the residual cornering force.

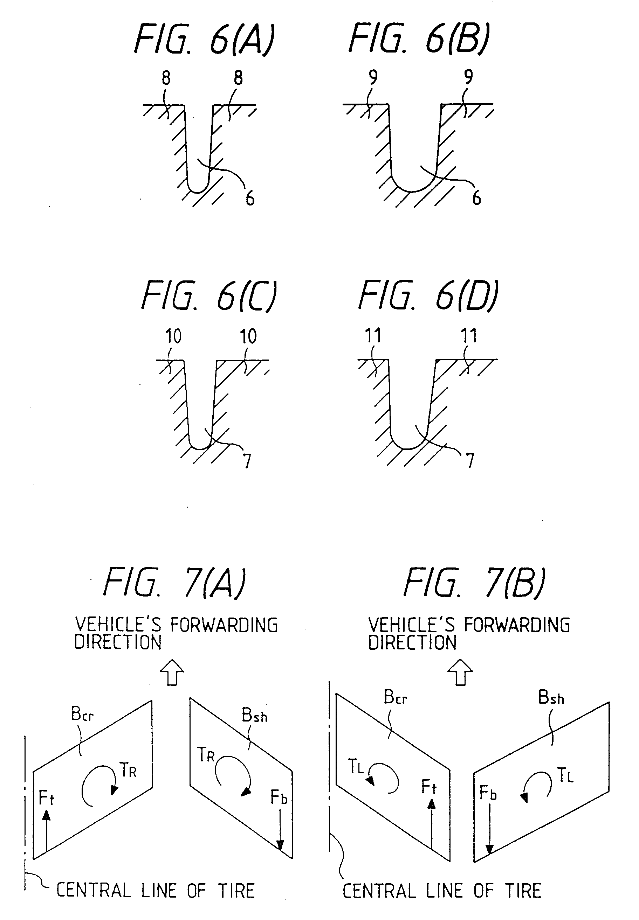

Consider, for example, a prior art tyre having the block pattern shown in Fig. 7(A) . A block Bcr provided in the crown portion is inclined rearwards in the direction of tyre rotation toward the external part of the tread in the direction of its width, whereas a block Bsh in the shoulder portion is inclined forwards in the direction of tyre rotation towards the external part of the tread in the direction of its width, whereby a tractive force Ft works at the internal front end of block Bcr and a braking force Fb at the external front end of block Bsh. As a result, the two blocks Bcr and Bsh are twisted in the direction shown and a torque T_{R} rotating clockwise in the drawing is developed in the area of the tread that is right of the center of the tread shown (the torque is counterclockwise in the tread area on the left side), whereby the self-aligning torque SAT is increased and, hence, the residual cornering force will increase as a whole (see Fig. 8 (A)).

Consider also a prior art tyre having the block pattern shown in Fig. 7(B). The block Bcr provided in the crown portion is inclined forward in the direction of tyre rotation towards the external part of the tread in the direction of its width, whereas the block Bsh in the shoulder portion is inclined rearwards in the direction of tyre rotation towards the external part of the tread in the direction of its width, whereby a tractive force Ft acts at the external front end of block Bcr and a braking force Fb at the internal front end of block Bsh. As a result, the two blocks Bcr and Bsh are twisted as shown and a torque T_{L} rotating counterclockwise is developed in the area of the tread that is right of the center of the tread shown (the torque is clockwise in the tread area on the left side), whereby the self-aligning torque SAT is decreased and, hence, the residual cornering force is decreased as a whole (see Fig. 8(B)).

As described above, the residual cornering force taken as a whole varies with the flow direction of the tread pattern and, depending on the tread pattern, a great force will develop in an opposite direction to the residual cornering force determined by the direction of attachment of belt cords, causing the vehicle to slip down the cant of the road.

A tyre according to the preamble of claim 1 is known from EP-A-0 547 040.

An object, therefore, of the present invention is to provide a pneumatic tyre in which the effect to be caused by the tread pattern on the residual cornering force is sufficiently suppressed to insure enhanced maneuverability.

According to the present invention a pneumatic tyre comprises tread having a central portion and shoulder portions, said shoulder portions being formed on both sides of said central portion, two main grooves provided symmetrically of the equatorial plane of the tyre, said main grooves dividing said shoulder portions from said central portion and extending in the circumferential direction of said pneumatic tyre, a plurality of centrally lateral grooves provided in said central portion, said central lateral grooves extending in the direction of tyre's width, and a plurality of shoulder lateral grooves provided in each of said shoulder portions, said shoulder lateral grooves extending in the direction of the tyre's width, and being inclined in opposite directions to said central lateral grooves with respect to the axial direction of the tyre, characterized in that all walls of said central lateral grooves being inclined in the same direction with respect to a line in the radial direction of the tyre,, and in that all walls of said shoulder lateral grooves being inclined in opposite directions to the walls of the central lateral grooves with respect to a line in the radial direction of the pneumatic tyre.

Preferably, the cord in the outermost layer of the belt is inclined in the same direction as the lateral grooves in the central portion.

Preferably, sub-grooves continuous in the circumferential direction of the tyre are provided in either the central portion or each shoulder portion or both.

Preferably, the lateral grooves in the central portion are open at one end to the main grooves but closed at the other end. And the lateral grooves in each shoulder portion are open to the main grooves and the tread end at opposite ends.

In the tyre of the invention, the lateral grooves in the central portion of the tread and those in each shoulder portion are inclined in opposite directions with respect to the axial direction of the tyre.

All walls of the lateral grooves in the central portion are inclined in the same direction in depth with respect to a line in the radial direction of the tyre, and all walls of the lateral grooves in each shoulder portion are inclined in opposite directions to the walls of the lateral grooves in the central portion with respect to a line in the radial direction of the tyre. On account of this arrangement, both the tractive force Ft working in the crown blocks located in the central portion and the braking force Fb working in the shoulder blocks in the shoulder portions are sufficiently reduced to decrease torque development, thereby suppressing the changes in self-aligning torque SAT. At the same time, the stiffness of the crown and shoulder blocks is varied in the running direction of the tyre not only in the front part but also in the rear part, whereby the tractive force Ft and the braking force Fb are sufficiently reduced to suppress the effect of the tread pattern on the residual cornering force.

If the cord in the outermost layer of the belt is inclined in the same direction as the lateral grooves in the central portion of the tread, one can balance the residual cornering force that is determined by the direction of attachment of the belt cords.

If sub-grooves continuous in the circumferential direction of the tyre are provided in either the central portion of the tread or each shoulder portion or both, the lateral stiffness constant of the crown or shoulder blocks in the lateral direction can be sufficiently reduced to suppress the effect that the tread pattern will cause on the residual cornering force.

If the lateral grooves in the central portion of the tread are open at one end to the main grooves but closed at the other end and if the lateral grooves in each shoulder portion are open to the main grooves and the tread end at opposite ends, the stability of a tyre running straight and, hence, its maneuverabilty is improved while, at the same time, the water draining performance of the tyre and, hence, its wet running performance can be ensured.

Further aspects of the invention will be apparent from the following description, by way of example only, of embodiments in conjunction with the attached diagrammatic drawings in which:
Fig. 1 shows, in flat form, the tread pattern of a pneumatic tyre for running on the left side of the road according to the present invention;
Fig. 2 shows, in flat form, the tread pattern of a pneumatic tyre for running on the right side of the road according to the present invention;
Fig. 3(A) is a section taken along line A-A (or J-J') of Fig. 1; Fig. 3(B) is a section taken along line B-B' (or I-I') of Fig. 1; Fig. 3(C) is a section taken along line C-C' (or H-H') of Fig. 1;
Fig. 3(D) is a section taken along line D-D' (or G-G') of Fig. 1; and Fig. 3(E) is a section taken along line E-E' (or F-F') of Fig. 1;
Fig. 4 is a table showing various pneumatic tyres for running on the left side of the road according to the present invention compared with conventional tyres;
Fig. 5 is a table showing various pneumatic tyres for running on the right side of the road according to the present invention compared with conventional tyres;
Figs. 6(A) to 6(D) show in enlarged cross section the essential part of lateral grooves in a tyre of a conventional structure;
Figs. 7(A) and 7(B) illustrate the flow directions of crown and shoulder blocks;
Figs. 8(A) and 8(B) are a set of cornering force and self-aligning torque characteristic diagrams that show the changes in the residual cornering force developed by the tread pattern shown in Figs. 7(A) and 7(B);
Fig. 9 is a plan view of a belt layer in which a cord is attached in a direction sloping upwards to the right as seen from the outside of a tyre;
Fig. 10 is a plan view of a belt layer in which a cord is attached in a direction sloping upwards to the left as seen from the outside of a tyre;

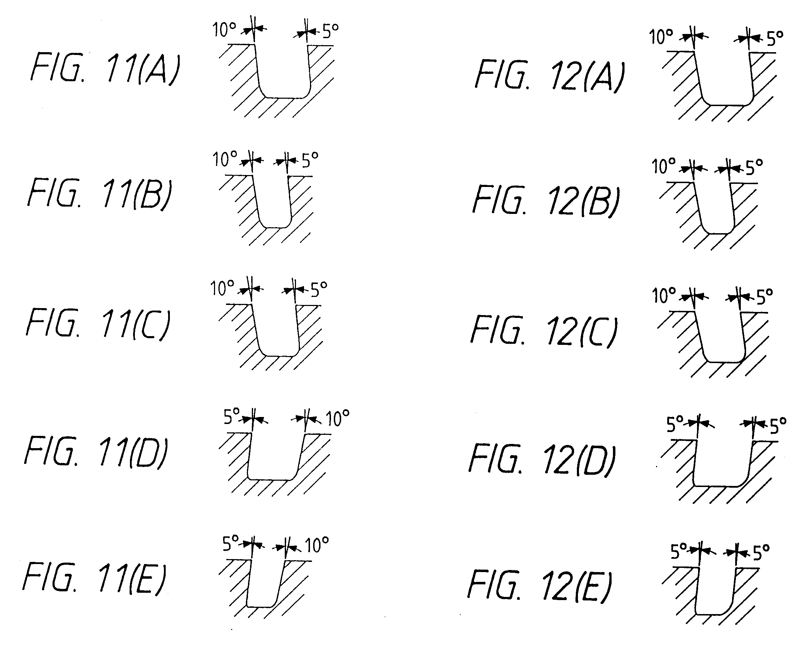

Fig. 11(A) is a cross sectional view of the grooves of Example 1 and Comparative Example 2 at A-A' and J-J' of Fig.1; Fig. 11(B) is a cross sectional view of grooves at B-B' and I-I'; Fig. 11(C) is a cross sectional view of grooves at C-C' and H-H'; Fig. 11(D) is a cross sectional view of grooves at D-D' and G-G'; and Fig. 11(E) is a cross sectional view of grooves at E-E' and F-F';
Fig. 12(A) is a cross sectional view of the grooves of Example 2 and Comparative Example 3 at A-A' and J-J' of Fig.1; Fig. 12(B) is a cross sectional view of the grooves at B-B' and I-I'; Fig. 12(C) is a cross sectional view of the grooves at C-C' and H-H'; Fig. 12(D) is a cross sectional view of the grooves at D-D' and G-G'; and Fig. 12(E) is a cross sectional view of the grooves at E-E' and F-F';

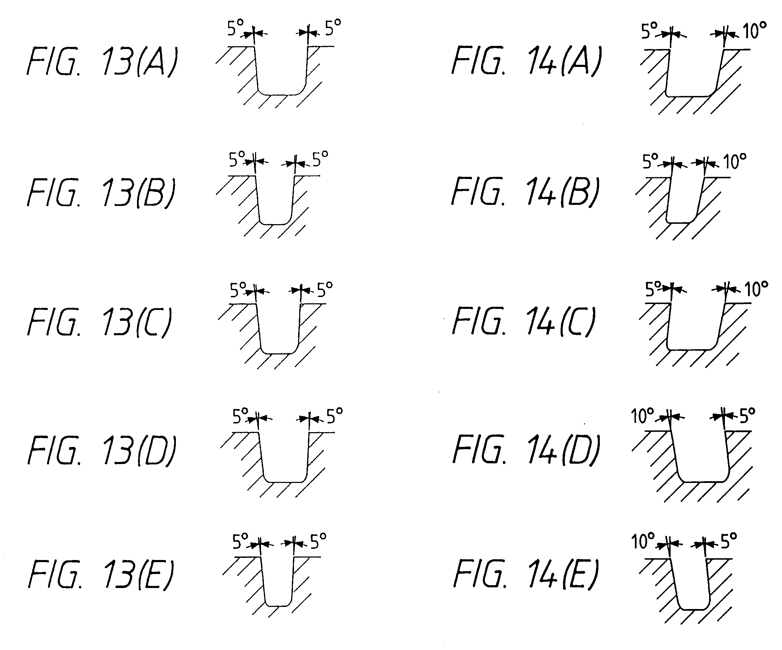

Fig. 13(A) is a cross sectional view of the grooves of Comparative Examples 1, 4, 6 and 9 at A-A' and J-J' of Fig.1 or Fig.2; Fig. 13(B) is a cross sectional view of the grooves at B-B' and I-I'; Fig. 13(C) is a cross sectional view of the grooves at C-C' and H-H'; Fig. 13(D) is a cross sectional view of the grooves at D-D' and G-G'; and Fig. 13(E) is a cross sectional view of the grooves at E-E' and F-F';
Fig. 14(A) is a cross sectional view of the grooves of Example 3 and Comparative Example 7 at A-A' and J-J' of Fig.2; Fig. 14(B) is a cross sectional view of the grooves at B-B' and I-I'; Fig. 14(C) is a cross sectional view of the grooves at C-C' and H-H'; Fig. 14(D) is a cross sectional view of the grooves at D-D' and G-G'; and Fig. 14(E) is a cross sectional view of the grooves at E-E' and F-F'; and

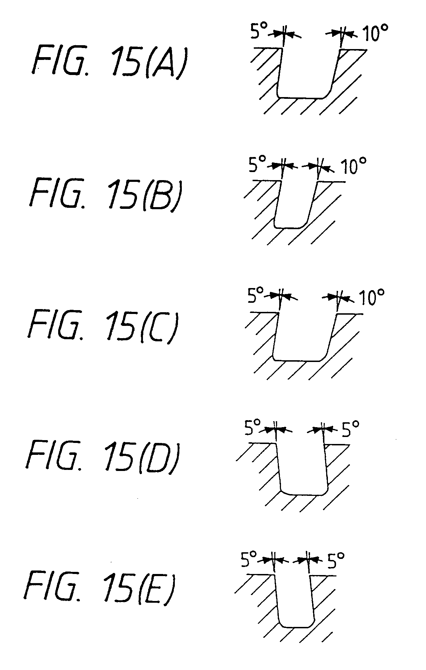

Fig. 15(A) is a cross sectional view of the grooves of Example 4 and Comparative Example 8 at A-A' and J-J' of Fig.2; Fig. 15(B) is a cross sectional view of the grooves at B-B' and I-I'; Fig. 15(C) is a cross sectional view of the grooves at C-C' and H-H'; Fig. 15(D) is a cross sectional view of grooves at D-D' and G-G'; and Fig. 15(E) is a cross sectional view of the grooves at E-E' and F-F'.

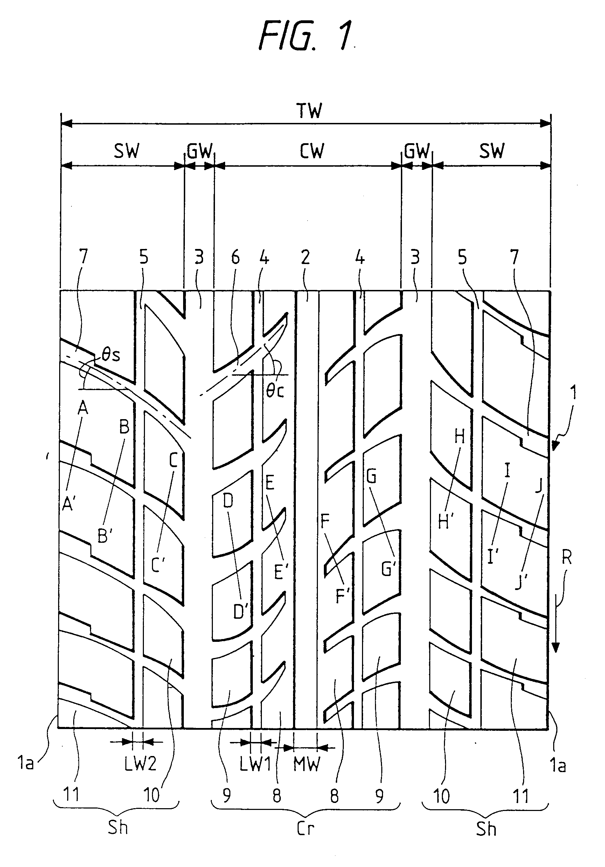

The tread 1 of the pneumatic tyre shown in Fig. 1 has the cords in the outermost layer of a belt positioned slope upwards to the right as shown in Fig. 6 (or slope upwards to the left in the case of a tyre to be mounted on a vehicle for running on the right side of the road). The tread pattern comprises: a central sub-groove 2 that is provided in the center of the tread and which extends in the circumferential direction of the tyre; a pair of main grooves 3 that are provided symmetrically on the two sides of the central sub-groove 2 and which extend in the circumferential direction of the tyre; a pair of first sub-grooves 4, each being provided between the central sub-groove 2 and each main groove 3 and extending in the circumferential direction of the tyre; a pair of second sub-grooves 5 that are provided outward of the main grooves 3 in the direction of tread's width and which extend in the circumferential direction of the tyre; central lateral grooves 6 that are provided on the two sides of the central sub-grooves 2 and which extend in the direction of tread's width in such a way that one end is located to be closed in the neighborhood of the central sub-groove 2 while the other end is continuous and open to the main grooves 3; and shoulder lateral grooves 7 that extend in the direction of tread's width in such a way that one end is continuous and open to the main grooves 3 while the other end reaches either tread end 1a to which it is open.

The space between the main grooves 3 is referred to as the crown or central portion Cr; the space between either main groove 3 and the associated tread edge 1a is referred to as the shoulder portion Sh; the central portion Cr is set to have a width CW that ranges from 40 to 60%, preferably 50%, of the tread width TW.

The central sub-groove 2, the first sub-grooves 4 and the central lateral grooves 6 define a pair of central crown blocks 8 that are provided on the two sides of the central sub-groove 2 in the circumferential direction of the tyre; the main grooves 3, the first sub-grooves 4 and the central lateral grooves 6 define outer crown blocks 9; the main grooves 3, the second sub-grooves 5 and the shoulder lateral grooves 7 define inner shoulder blocks 10; and the second sub-grooves 5 and the shoulder lateral grooves 7 define outer shoulder blocks 11.

The direction of the central lateral grooves 6 which slope upwards to the right in Fig. 1 (or to the left in the case of a tyre to be mounted on a vehicle for running on the right side of the road) and the direction of the shoulder lateral grooves 7 which slope upwards to the left (or to the right in the case of a tyre to be mounted on a vehicle for running on the right side of the road) are set to be opposite to each other with respect to the axial direction of the tyre. Stated more specifically, the angle θ_{c} in the direction of a central lateral groove, or the acute angle the groove center line connecting the centers at two points of the width of a central lateral groove 6 forms with respect to the axial direction of the tyre. and the angle θₛ in the direction of a shoulder lateral groove, or the acute angle the groove center line connecting the centers at two points of the width of a shoulder lateral groove 7 forms with respect to the axial direction of the tyre, are set to be in opposite directions with respect to the axial direction of the tyre.

As described above, the central lateral grooves 6 are formed in the same direction as the cords in the outermost layer of the belt (sloping upwards to the right in Fig. 1).

The direction in which the tyre rotates is indicated by arrow R in Fig. 1.

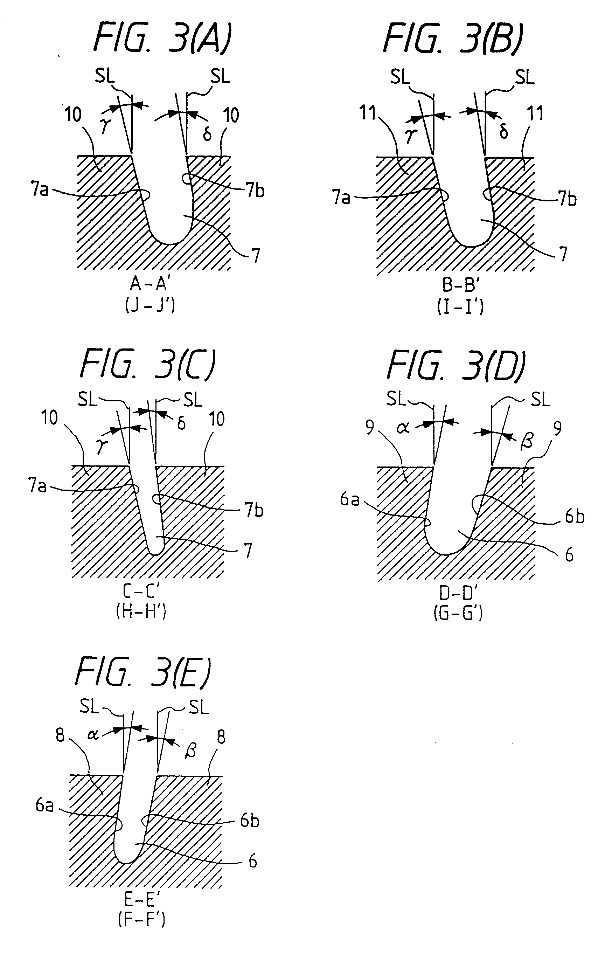

Figs. 3(A) to 3(E) show a set of diagrams showing cross sections of the central lateral groove 6 and the shoulder lateral groove 7 taken across planes normal to the groove center line and the tread surface. Fig. 3(A) is a section taken along line A-A' and J-J' in Fig. 1; Fig. 3(B) is a section taken along line B-B' and I-I'; Fig. 3(C) is a section taken along line C-C' and H-H'; Fig. 3(D) is a section taken along line D-D' and G-G'; and Fig. 3(E) is a section taken along line E-E' and F-F'. In Figs. 3(A to 3(E), the rotating direction of the tyre R is shown to be from left to right.

As shown in Figs. 3(D) and 3(E), each of the central lateral grooves 6 in the central portion Cr are formed in such a way that their walls 6a and 6b are inclined in the rotating direction of the tyre R from the groove bottom towards its opening with reference to a line in the radial direction of tyre SL (or a line normal to the tread surface), and the angle α of the groove wall 6a at the front end in the direction R in association with crown blocks, namely, the central crown block 8 and the outer crown block 9 (α = +5° in the example under discussion) is set to be different from the angle β of the groove wall 6b at the rear end (β = +10° in the example). Thus, α≠β. On the other hand, the inclinations of the walls of the central lateral grooves with respect to the advancing direction are opposite for a tyre to be mounted on a vehicle for running on the right side of the road.

As shown in Figs. 3(A), 3(B) and 3(C), each of the shoulder lateral grooves 7 in the shoulder portions Sh are formed in such a way that their walls 7a and 7b are inclined in a direction opposite to the rotating direction of the tyre R from the groove bottom to its opening with reference to the line SL, and the angle g of groove wall 7a at the front end in the direction R in association with shoulder blocks, namely, the inner shoulder block 10 and the outer shoulder block 11 (γ = -10° in the example under discussion) is set to be different from the angle δ of groove wall 7b at the rear end (δ = -5° in the example). Thus γ≠δ.

It should be noted here that the angles of the lateral groove walls in association with the crown blocks differ from those of the lateral groove walls in association with the shoulder blocks irrespective of whether they are at the front or rear end in the rotating direction of tyre R; thus α≠γ, β≠γ, α≠δ, and β≠δ.

With the arrangement described above, the crown blocks in the central portion Cr, namely, the central crown blocks 8 and the outer crown blocks 9, are sufficiently reduced in stiffness in the rotating direction of the tyre R so that a smaller tractive force Ft is developed. Further, the shoulder blocks in the shoulder portions Sh, namely, the inner shoulder blocks 10 and the outer shoulder blocks 11, are sufficiently reduced in stiffness in the direction R so that a smaller braking force Fb is developed. As a result, torque development is sufficiently reduced to suppress the changes in self-aligning torque SAT, thereby reducing the residual cornering force due to the tread pattern.

A more detailed discussion is made below of the mechanism of the action of the example under consideration which relates to a tyre to be mounted on a vehicle for running on the left side of the road. In the example, the cords in the outermost layer of the belt are attached in the opposite direction (sloping upwards to the right) and, hence, the residual cornering force that is developed by the belt will work in a direction facing the right side of Fig. 1.

On the other hand, the central lateral grooves 6 are formed to slope upwards to the right whereas the shoulder lateral grooves 7 are formed to slope downwards to the right; therefore, the residual cornering force due to the tread pattern will work in a direction facing the left side of Fig. 1, or in the opposite direction to the residual cornering force developed by the belt. However, as described hereinabove, the groove walls in association with the crown blocks are inclined in opposite directions to the groove walls associated with the shoulder blocks with reference to the radial line SL while, at the same time, the angles of groove walls at the front end in the rotating direction of tyre R are set to vary from those at the rear end irrespective of whether the grooves are associated with the crown blocks or shoulder blocks; as a result of these arrangements, the residual cornering force due to the tread pattern is sufficiently reduced to suppress its effect on the overall residual cornering force.

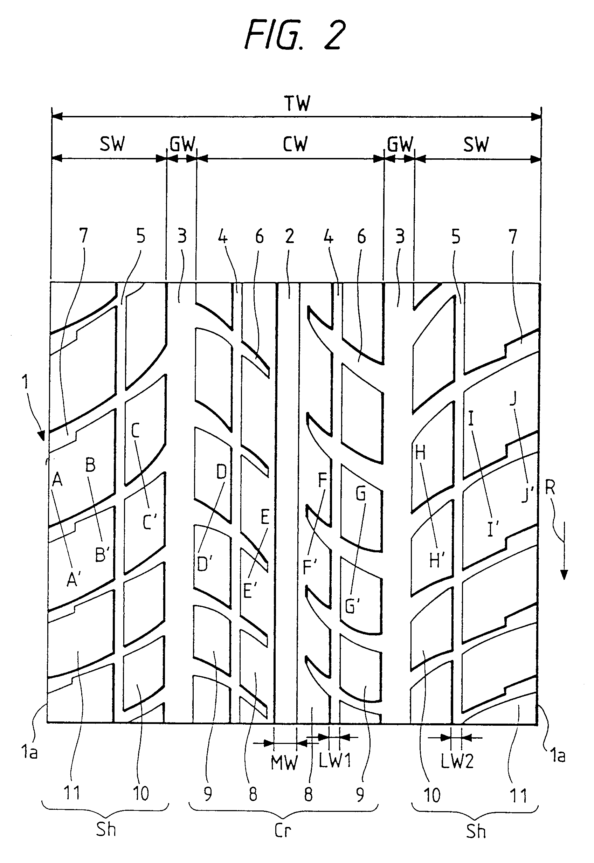

It should be added that a tyre to be mounted on a vehicle for running on the right side of the road will perform in the same manner to produce the same result if the direction of attachment of the cord in the outermost layer of the belt (see Fig. 10), as well as the directions of the central and shoulder lateral grooves (see Fig. 2) are reversed from the case of the example under discussion.

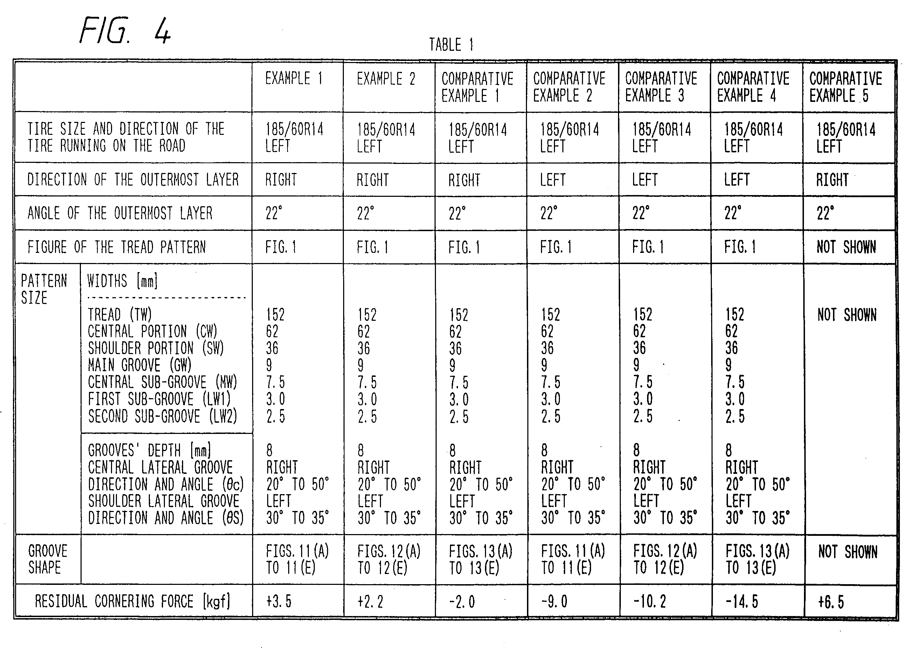

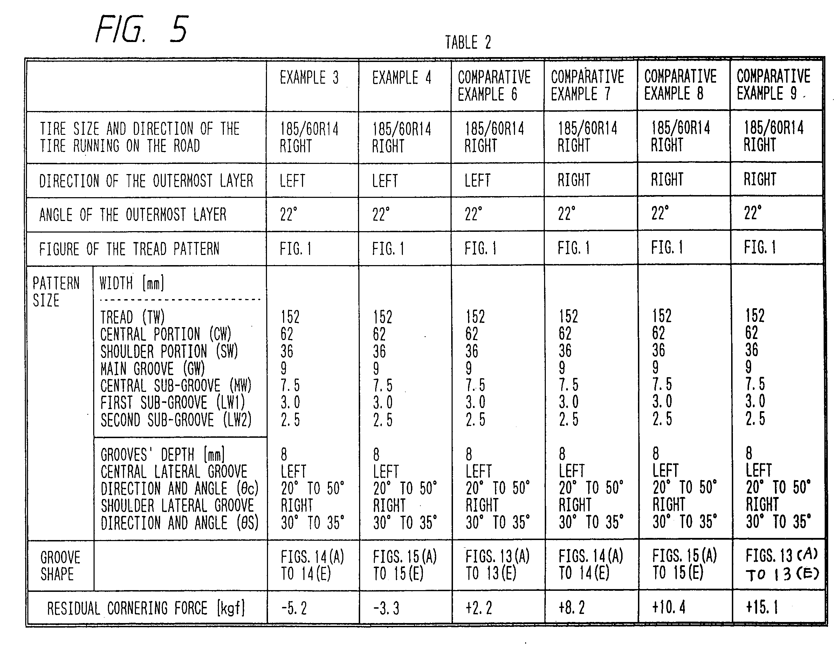

Results of evaluation of examples which embody the present invention and comparative examples which are of various conventional constructions will be described with reference to Table 1 (Fig. 4) and Table 2 (Fig 5).

Table 1 shows the results of measuring the residual cornering forces of Examples 1, 2 and Comparative Examples 1 to 5 for running on the left side of the road. All of these tyre sizes were 185/60R14. The Examples 1, 2 and the Comparative Examples 1 to 4 had a tread pattern the same as shown in Fig. 1 and had the same size and specification. Comparative Example 5, which was a plain tyre, had no groove, that is no tread pattern.

With regard to the Examples 1, 2 and the Comparative Examples 1 and 5, the direction of an outermost belt cord layer was inclined upwards to the left and the inclination angle set 22° In the Comparative Examples 2 and 3, the direction of an outermost belt cord layer was inclined upwards to the right and the inclination angle set 22°.

More specifically, the size and specification of the tread pattern of the Examples 1, 2 and the Comparative Examples 1 to 4 were as follows: TW (the tread width) = 152 mm; CW (the width of the central portion Cr) = 62 mm; SW (the width of the shoulder portion Sh) = 36 mm; GW (the width of the main grooves 3) = 9 mm; MW (the width of the central sub-groove 2) = 7.5 mm; LW1 (the width of the first sub-grooves 4) = 3.0 mm; LW2 (the width of the second sub-grooves 5) = 2.5 mm; the direction of the central lateral grooves 6 was inclined upwards to the right; θc (the angle in the direction of the central lateral grooves 6) = 20° to 50°; the direction of the shoulder lateral grooves 7 was inclined upwards to the left; θs (the angle in the direction of the shoulder lateral grooves 7) = 30° to 35°; and all of the groove depths were 8 mm.

In Table 1, the expression "inclined upward to the left" is defined by "inclined upward to left when one standing on the equator plane of a tyre sees the tyre from the outside in the radius direction." This definition also applies to Table 2.

In the Example 1, α (the angle of the wall at the front end of the central lateral grooves 6) = +5°; and β (the angle of the wall at the rear end of the central lateral grooves 6) = +10°. (See cross sectional views of D-D', E-E', F-F' and G-G'.) And, in the Example 1, γ (the angle of the wall at the front end of the shoulder lateral grooves 7) = -10°; and δ (the angle of the wall at the rear end of the shoulder lateral grooves 7) = -5°. (See cross sectional views of A-A', B-B', C-C', H-H', I-I' and J-J'.) (Here, plus and minus of the angle are defined such a manner that plus means the angle measured toward the tyre rotational direction and minus means the angle measured opposite to the tyre rotational direction. This definition also applies to Table 2.)

In the Example 2, α (the angle of the wall at the front end of the central lateral grooves 6) = +5°; and β (the angle of the wall at the rear end of the central lateral grooves 6) = +5°. (Thus α = β.) And, in the Example 2, γ (the angle of the wall at the front end of the shoulder lateral grooves 7) = -10°; and δ (the angle of the wall at the rear end of the shoulder lateral grooves 7) = -5°. Thus γ and δ of the Example 2 were the same values as the Example 1.

Comparative Example 1 (see Figs. 6(A) to 6(D)) was a conventional tyre, and the lateral grooves of the Comparative Example 1 had a symmetrical shape in cross section. α (the angle of the wall at the front end of the central lateral grooves 6) = -5°; and β (the angle of the wall at the rear end of the central lateral grooves 6) = +5°. And, γ (the angle of the wall at the front end of the shoulder lateral grooves 7) = -5°; and d (the angle of the wall at the rear end of the shoulder lateral grooves 7) = +5°.

Comparative Example 2 had the same lateral grooves as the Example 1 in cross section, the Comparative Example 3 had the same lateral grooves as the Example 2 in cross section, and the Comparative Example 4 had the same lateral grooves as the Comparative Example 1 in cross section.

The residual cornering forces were measured by a residual cornering force measurement device of the on-stand indoor type under standard conditions when the SAT (self-aligning torque) = 0 kgf×m. Positive (+) values denote that the force applies to the right of the vehicle's forwarding direction, and negative (-) values denote that the force applies to the left of the vehicle's forwarding direction.

Obviously from the results shown in Table 1, Examples 1 and 2 which embody the present invention had a residual cornering force which was positive, that is the force applied to the right of the vehicle's forwarding direction. Therefore, under running on the left side of the road, the force applied was opposite to the lateral force of the cant, so that the vehicle's turning by the cant would be suppressed.

On the contrary, Comparative Example 1 which was a conventional tyre had a residual cornering force which was negative. The reason is that the force to the left of the vehicle's forwarding direction caused by the tread pattern was larger than the force to the right from the outermost belt cord layer inclined upwards to the right. Totally, the residual cornering force was negative, that is a residual cornering force remained to the left of the vehicle's forwarding direction. Therefore, when running on the left side of the road, the force applied was in the same direction as the lateral force of the cant, so that the vehicle's turning was enhanced.

Furthermore, in Comparative Examples 2, 3 and 4, the force arose to the left of the vehicle forwarding direction due to the cord of the outermost belt cord layer extending upwards to the left, and the force from the tread pattern was negative, that is the force also acted to the left. Therefore, those forces acted in the same direction as the lateral force of the cant, so that the vehicle's turning was further enhanced.

Still further, in Comparative Example 5, running on the left of the road, the residual cornering force to the right of the vehicle forwarding direction becomes larger than the others. Therefore, the effect that the vehicle's turn was suppressed was higher than the others. However, Comparative Example 5 cannot apply to an ordinary vehicle because the wet grip performance was too low for safety.

Table 2 shows the results of measuring the residual cornering forces of Examples 3, 4 and Comparative Examples 6 to 9 for running on the right side of the road. All of these tyre sizes were 185/60R14. The Examples 3, 4 and the Comparative Examples 6 to 9 had a tread pattern the same as shown in Fig. 2 and had the same size and specification.

With regard to the Examples 3, 4 and Comparative Example 6, the direction of an outermost belt cord layer was inclined upwards to the left and the inclination angle set 22° In Comparative Examples 7, 8 and 9, the direction of an outermost belt cord layer was inclined upwards to the right and the inclination angle was set at 22°. The size and specification of the tread pattern on the Examples 3, 4 and the Comparative Examples 6 to 9 were the same as shown in Table 1.

In Example 3, α (the angle of the wall at the front end of the central lateral grooves 6) = -10°; and β (the angle of the wall at the rear end of the central lateral grooves 6) = -5°. In Example 3, γ (the angle of the wall at the front end of the shoulder lateral grooves 7) = +5°; and δ (the angle of the wall at the rear end of the shoulder lateral grooves 7) = +10°. In Example 4, α (the angle of the wall at the front end of the central lateral grooves 6) = -5°; and β (the angle of the wall at the rear end of the central lateral grooves 6) = -5°. (Thus α = β.) And, in the Example 4, γ (the angle of the wall at the front end of the shoulder lateral grooves 7) = +5°; and δ (the angle of the wall at the rear end of the shoulder lateral grooves 7) = +10°. Those γ and δ of the Example 4 were the same values as the Example 3.

Comparative Example 6 (see Figs. 6(A) to 6(D)) was a conventional tyre, and the lateral grooves of Comparative Example 6 had a symmetrical shape in cross section. α (the angle of the wall at the front end of the central lateral grooves 6) = -5°; and β (the angle of the wall at the rear end of the central lateral grooves 6) = +5°. And, γ (the angle of the wall at the front end of the shoulder lateral grooves 7) = -5°; and δ (the angle of the wall at the rear end of the shoulder lateral grooves 7) = +5°.

Comparative Example 7 had the same lateral grooves as Example 3 in cross section, Comparative Example 8 had the same lateral grooves as Example 4 in cross section, and Comparative Example 9 had the same lateral grooves as Comparative Example 6 in cross section.

Obviously from the results shown in Table 2, the Examples 3 and 4 which embody the present invention had a residual cornering force which was negative, that is the force applied to the left of the vehicle's forwarding direction. Therefore, under running on the right side of the road, the force was applied oppositely to the lateral force of the cant, so that the vehicle's turn by the cant could be suppressed.

On the contrary, Comparative Example 6 which was a conventional tyre had a residual cornering force which was positive. The reason was that the force to the right of the vehicle's forward direction caused by the tread pattern was larger than the force to the left from the outermost belt cord layer which was inclined upwards to the left. As a whole, the residual cornering force was positive, that is the residual cornering force acted to the right of the vehicle's forwarding direction. Therefore, under running on the right side of the road, the force applied to the same direction as the lateral force of the cant, so that the vehicle's turn was enhanced.

Furthermore, in Comparative Examples 7, 8 and 9, the forces arose to the right of the vehicle forward direction caused by the outermost belt cord layer upwards to the right, and the force by the tread pattern also acted to the right. Therefore, those forces acted in the same direction as the lateral force of the cant, so that the vehicle's turn was further enhanced.

In conclusion, it was clear that the residual cornering force by the tread pattern decreased in the tyres according to the present invention, and that the influence of the force by the tread pattern on the residual cornering force by the belt was reduced.

Being constructed in the manner described above, the pneumatic tyre of the invention offers the following advantages.

In its construction, the lateral grooves in the central portion of the tread and those in each shoulder portion are inclined in opposite directions with respect to the axial direction of the tyre, and all walls of the lateral grooves in the central portion are inclined in the same direction with respect to a line in the radial direction of the tyre and all walls of the lateral grooves in each shoulder portion are inclined in opposite directions to the walls of the lateral grooves in the central portion with respect to a line in the radial direction of the tyre. On account of this arrangement, both the tractive force Ft working in the crown blocks located in the central portion and the braking force Fb working in the shoulder blocks in the shoulder portions are sufficiently reduced to decrease torque development, thereby suppressing the changes in self-aligning torque SAT. At the same time, the stiffness of the crown and shoulder blocks is varied in the running direction of the tyre not only in the front part but also in the rear part, whereby the tractive force Ft and the braking force Fb are sufficiently reduced to suppress the effect the tread pattern will cause on the residual cornering force.

If the cord in the outermost layer of the belt is inclined in the same direction as the lateral grooves in the central portion of the tread, one can insure the residual cornering force that is determined by the direction of attachment of the belt cords.

If sub-grooves continuous in the circumferential direction of the tyre are provided in either the central portion of the tread or each shoulder portion or both, the lateral stiffness constant of the crown or shoulder blocks in the lateral direction can be sufficiently reduced to suppress the effect the tread pattern will cause on the residual cornering force.

If the lateral grooves in the central portion of the tread are open at one end to the main grooves but closed at the other end and if the lateral grooves in each shoulder portion are open to the main grooves and the tread end at opposite ends, the stability of a tyre running straight and, hence, its maneuverability is improved while, at the same time, the water draining performance of the tyre and, hence, its wet running performance can be improved.

## Claims

1. A pneumatic tyre comprising, a tread (1) having a central portion (Cr) and shoulder portions (Sh), said shoulder portions (Sh) formed on both sides of said central portion (Cr), two main grooves (3) provided symmetrically of the equatorial plane of the tyre, said main grooves (3) dividing said shoulder portions (Sh) from said central portion (Cr) and extending in the circumferential direction of said pneumatic tyre, a plurality of centrally lateral grooves (6) provided in said central portion (Cr), said central lateral grooves (6) extending in the direction of tyre's width, and a plurality of shoulder lateral grooves (7) provided in each of said shoulder portions (Sh), said shoulder lateral grooves (7) extending in the direction of the tyre's width, and being inclined in opposite directions to said central lateral grooves (6) with respect to the axial direction of the tyre, characterized in that all walls (6a,6b) of said central lateral grooves being inclined in the same direction with respect to a line (SL) in the radial direction of the tyre; and in that all walls (7a,7b) of said shoulder lateral grooves (7) being inclined in opposite directions to the walls (6a,6b) of the central lateral grooves (6) with respect to a line (SL) in the radial direction of the pneumatic tyre.

2. A pneumatic tyre according to claim 1, comprising at least one belt cord layer, characterised in that the outermost belt cord layer has its cords inclined in the same direction as the central lateral grooves (6).

3. A pneumatic tyre according to claim 1 or 2, characterised in that sub-grooves (2,4,5) continuous in the circumferential direction of the tyre are provided in either the central portion (Cr) or each shoulder portion (SL) or both.

4. A pneumatic tyre according to claim 1, 2 or 3, characterised in that the central lateral grooves (6) are open at one end to the main grooves (3) but closed at the other end and wherein said shoulder lateral grooves (7) are open to the main grooves (3) and the tread edge at opposite ends.

## Patentansprüche

1. Luftreifen mit einer Lauffläche (1) mit einem zentralen Teil (Cr) und Schulterteilen (Sh), wobei die Schulterteile (Sh) auf beiden Seiten des zentralen Teils (Cr) gebildet sind, zwei Hauptrillen (3), die symmetrisch zur Äquatorebene des Reifens vorgesehen sind, wobei die Hauptrillen (3) die Schulterteile (Sh) von dem zentralen Teil (Cr) trennen und sich in der Umfangsrichtung des Luftreifens erstrecken, mehreren Zentral-Querrillen (6), die in dem zentralen Teil (Cr) vorgesehen sind, wobei sich die zentralen Querrillen (6) in der Richtung der Breite des Reifens erstrecken, und mehreren Schulter-Querrillen (7), die in jedem der Schulterteile (Sh) vorgesehen sind, wobei sich die Schulter-Querrillen (7) in der Richtung der Breite des Reifens erstrecken und in entgegengesetzte Richtungen zu den zentralen Querrillen (6) bezüglich der Achsenrichtung des Reifens geneigt sind, dadurch gekennzeichnet, daß alle Wände (6a, 6b) der zentralen Querrillen bezüglich einer Linie (SL) in der radialen Richtung des Reifens in der gleichen Richtung geneigt sind und daß alle Wände (7a, 7b) der Schulter-Querrillen (7) bezüglich einer Linie (SL) in der radialen Richtung des Luftreifens in zu den Wänden (6a, 6b) der zentralen Querrillen (6) entgegengesetzte Richtungen geneigt sind.

2. Luftreifen nach Anspruch 1 mit zumindest einer Gürtelkordschicht, dadurch gekennzeichnet, daß die äußerste Gürtelkordschicht ihre Kordfäden in der gleichen Richtung wie die zentralen Querrillen (6) geneigt aufweist.

3. Luftreifen nach Anspruch 1 oder 2, dadurch gekennzeichnet, daß in der Umfangsrichtung des Reifens durchgehende Nebenrillen (2, 4, 5) in entweder dem zentralen Teil (Cr) oder jedem Schulterteil (SL) oder beiden vorgesehen sind.

4. Luftreifen nach Anspruch 1, 2 oder 3, dadurch gekennzeichnet, daß die zentralen Querrillen (6) an einem Ende zu den Hauptrillen (3) offen, aber an dem anderen Ende geschlossen sind, und worin die Schulter-Querrillen (7) zu den Hauptrillen (3) und der Laufflächenkante an gegenüberliegenden Enden offen sind.

## Revendications

1. Pneumatique comprenant une bande de roulement (1) ayant une partie centrale (Cr) et des parties d'épaulement (Sh), les parties d'épaulement (Sh) étant formées des deux côtés de la partie centrale (Cr), deux gorges principales (3) placées symétriquement par rapport au plan équatorial du pneumatique, les gorges principales (3) séparant les parties d'épaulement (Sh) de la partie centrale (Cr) et étant disposées dans la direction circonférentielle du pneumatique, plusieurs gorges latérales centrales (6) étant placées dans la partie centrale (Cr), les gorges latérales centrales (6) étant disposées dans la direction de la largeur du pneumatique, et plusieurs gorges latérales (7) d'épaulement étant placées dans chacune des parties d'épaulement (Sh), les gorges latérales (7) d'épaulement étant placées dans la direction de la largeur du pneumatique et étant inclinées en directions opposées à celles des gorges latérales centrales (6) par rapport à la direction axiale du pneumatique, caractérisé en ce que toutes les parois (6a, 6b) des gorges latérales centrales sont inclinées dans la même direction par rapport à une droite (Sh) qui est dans la direction radiale du pneumatique, et en ce que toutes les parois (7a, 7b) des gorges latérales (7) d'épaulement sont inclinées en directions opposées à celles des parois (6a, 6b) des gorges latérales centrales (6) par rapport à une droite (SL) placée dans la direction radiale du pneumatique.

2. Pneumatique selon la revendication 1, comprenant au moins une couche de câblé de ceinture, caractérisé en ce que la couche de câblé la plus externe de ceinture a des câblés inclinés dans la même direction que les gorges latérales centrales (6).

3. Pneumatique selon la revendication 1 ou 2, caractérisé en ce que des gorges secondaires (2, 4, 5) continues dans la direction circonférentielle du pneumatique sont placées dans la partie centrale (Cr) , dans chaque partie d'épaulement (SL) ou dans toutes ces parties.

4. Pneumatique selon la revendication 1, 2 ou 3, caractérisé en ce que les gorges latérales centrales (6) débouchent à une première extrémité dans les gorges principales (3) mais Sont fermées à l'autre extrémité, et dans lequel les gorges latérales (7) d'épaulement débouchent dans les gorges principales (3) et au bord de la bande de roulement à leurs extrémités opposées.
